Europäisches Patentamt

European Patent Office

Office européen des brevets

(19)

(11) Numéro de publication : **0 118 647**
**B1**

(12)

# FASCICULE DE BREVET EUROPÉEN

(45) Date de publication du fascicule du brevet :
29.07.87

(21) Numéro de dépôt : 83430028.7

(22) Date de dépôt : 25.08.83

(51) Int. Cl.⁴ : **F 16 K 31/34, F 16 K 33/00,**
**E 03 D 1/32**

(54) **Robinet pour réservoir de chasse d'eau.**

(30) Priorité : 09.03.83 FR 8303980

(43) Date de publication de la demande :
19.09.84 Bulletin 84/38

(45) Mention de la délivrance du brevet :
29.07.87 Bulletin 87/31

(84) Etats contractants désignés :
AT BE CH DE FR GB IT LI LU NL SE

(56) Documents cités :
CH-A-    85 621
CH-A-    256 307
DE-B- 1 193 440
FR-A-    614 098
FR-A- 2 331 730
GB-A-    766 538
GB-A- 1 540 083
GB-A- 2 031 556
US-A- 2 732 167
US-A- 3 073 337
US-A- 3 994 313

(73) Titulaire : SOCIETE PHOCEENNE DE MATIERES
PLASTIQUES " S P M P" Société Anonyme
120, avenue des Aygalades
F-13015 Marseille (FR)

(72) Inventeur : Marmonier, Gaston
376, boulevard Michelet
F-13009 Marseille (FR)
Inventeur : Vahradian, Jacques
86, rue Louis Grobet
F-13001 Marseille (FR)

(74) Mandataire : Marek, Pierre
28 & 32 rue de la Loge
F-13002 Marseille (FR)

## Description

La présente invention concerne un robinet hydromécanique pour réservoir de chasse d'eau, plus spécialement du genre à ouverture et fermeture hydrauliques commandées par un clapet pilote lui-même actionné par un flotteur mobile dans le plan vertical.

On connaît (FR-A-2 293 532) un robinet hydromécanique pour réservoir de chasse d'eau comportant un circuit d'écoulement primaire à ouverture et fermeture hydrauliques au moyen d'une membrane souple dont la position est fonction de la valeur de la pression présente dans un circuit d'écoulement secondaire équipé d'un clapet pilote actionné par l'intermédiaire d'un flotteur logé dans le réservoir de la chasse d'eau.

Un tel robinet procure des résultats très appréciables, notamment en ce qui concerne l'amélioration du niveau sonore des écoulements d'eau, la régularité du débit tout au long de la phase de remplissage, la constance du niveau de remplissage du réservoir quelle que soit la pression d'alimentation, la rapidité du remplissage et l'efficacité de l'obturation.

Cependant, ce robinet présente aussi quelques insuffisances dont l'une des plus notables découle de la position du dispositif anti-siphon constitué par un simple orifice au-dessous de l'entrée du conduit vertical du circuit d'écoulement primaire, ce qui limite le volume d'eau admissible dans certains réservoirs (une garde de 40 mm devant, en effet, séparer le niveau maximum de l'eau et l'orifice dudit dispositif antisiphon) et ne permet pas d'écarter radicalement tout risque de réaspiration de l'eau polluée ou additionnée de produits antiseptiques contenue dans le réservoir de chasse, dans la canalisation d'amenée d'eau raccordée au robinet, par exemple en cas d'intervention sur la tuyauterie, en amont dudit robinet ; en outre, cette position et cet agencement du dispositif anti-siphon occasionnent une aspiration d'air, par la circulation de l'eau, dans le conduit vertical d'écoulement, lors de l'ouverture du robinet et du remplissage du réservoir, ce qui est la cause de nuisances sonores (chuintements aigus, turbulences, émulsion de fluide, etc. ).

On connaît aussi des robinets pour réservoir de chasse d'eau d'un autre genre (DE-B-1 193 440) pourvus d'un dispositif anti-siphon disposé au-dessus de l'entrée du conduit vertical d'écoulement, mais ce dispositif est constitué par un simple tuyau débouchant dans le réservoir, et il présente l'inconvénient précédemment souligné d'occasionner une aspiration d'air dans le conduit vertical d'écoulement, sous l'effet de la circulation de l'eau, lors du remplissage du réservoir, ce qui engendre des sifflements et autres nuisances sonores.

La présente invention a notamment pour objet de remédier aux insuffisances des robinets hydromécaniques du genre à ouverture et fermeture hydrauliques commandées par un clapet pilote, et, plus généralement, de concevoir un robinet parfaitement conforme aux normes règlementaires et doté d'améliorations très sensibles et de qualités nouvelles, en ce qui concerne la sûreté de fonctionnement et l'atténuation des bruits d'écoulement aboutissant à un fonctionnement extrêmement silencieux dudit robinet.

Le robinet pour réservoir de chasse d'eau qui fait l'objet de la présente invention est notamment remarquable par le fait que son dispositif anti-siphon comportant un orifice d'entrée d'air et disposé au-dessus de l'entrée du conduit vertical d'écoulement débouchant dans le réservoir, comprend un clapet reposant de manière non étanche, en position d'ouverture du circuit de prise d'air, sur une assise sous-jacente ajourée disposée au-dessus de l'entrée dudit conduit vertical d'écoulement, le siège dudit clapet étant constitué par le bord inférieur dudit orifice d'entrée d'air et placé au-dessus dudit clapet, ledit conduit d'écoulement étant agencé pour freiner l'écoulement de l'eau et provoquer une remontée de cette dernière lors de sa circulation dans le circuit primaire, ce qui permet d'assurer le soulèvement du clapet et son application sur son siège superposé.

Cette disposition a pour avantages :

de permettre un niveau de remplissage optimal du réservoir, autorisant l'installation du robinet dans des réservoirs de hauteur réduite ;

d'éviter toute aspiration d'air dans le conduit vertical d'écoulement, lors du remplissage du réservoir, ce qui supprime les nuisances sonores résultant d'une telle aspiration (chuintements aigus, turbulences, émulsion de fluide, etc. ).

On observe, en effet, que, lors de la circulation de l'eau dans le circuit d'écoulement primaire, la pression résiduelle présente dans la branche inférieure de l'équerre de descente constituant la partie du conduit vertical d'écoulement qui est branchée au conduit de sortie du corps du robinet, a pour effet de provoquer une remontée de l'eau dans la branche supérieure de ladite équerre, ce qui permet le soulèvement du clapet du dispositif anti-siphon et son application sur son siège superposé, c'est-à-dire la fermeture du circuit de prise d'air. On conçoit qu'on supprime ainsi toute possibilité d'aspiration d'air dans le circuit primaire d'écoulement, lors du remplissage du réservoir lequel s'opère donc très silencieusement.

Ces buts, caractéristiques et avantages, et d'autres encore, ressortiront mieux de la description qui suit et des dessins annexés dans lesquels :

La figure 1 est une vue en coupe verticale du robinet de réservoir de chasse d'eau selon l'invention, passant par l'axe longitudinal du robinet proprement dit, et montrant ce dernier en position de fermeture.

La figure 2 est une vue en coupe selon la ligne 2-2 de la figure 1, le clapet du dispositif anti-siphon étant représenté écarté de son siège supérieur, dans une position correspondant à la fermeture du robinet, tandis que le tracé en traits interrompus montre ledit clapet appliqué contre son siège.

La figure 3 est une vue en plan et en coupe longitudinale suivant la ligne 3-3 de la figure 1.

Les figures 4 et 5 sont des vues en plan et en coupe selon les lignes 4-4 et 5-5, respectivement, de la figure 2.

La figure 6 est une vue analogue à la figure 1 et montrant le robinet en position d'ouverture autorisant l'écoulement de l'eau dans le réservoir de la chasse d'eau.

La figure 7 est une vue en plan et en coupe selon la ligne 7-7 de la figure 1.

La figure 8 est une vue de détail, avec coupe partielle, montrant la liaison articulée de la tige du clapet pilote sur le levier porte-flotteur et l'articulation de ce dernier sur la partie postérieure du corps fixe du robinet.

Les figures 9 à 11 sont des vues en perspective illustrant le basculement du conduit vertical d'écoulement du circuit primaire du robinet, d'un côté à l'autre du corps de ce dernier.

On se réfère auxdits dessins pour décrire un mode d'exécution avantageux, quoique nullement limitatif, du robinet perfectionné selon l'invention.

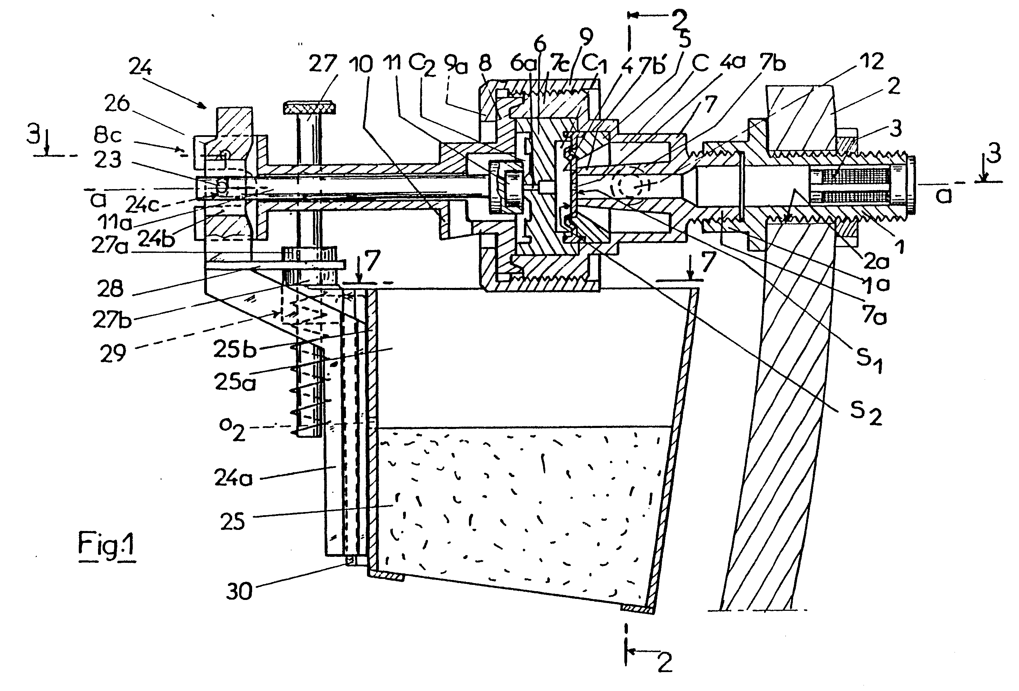

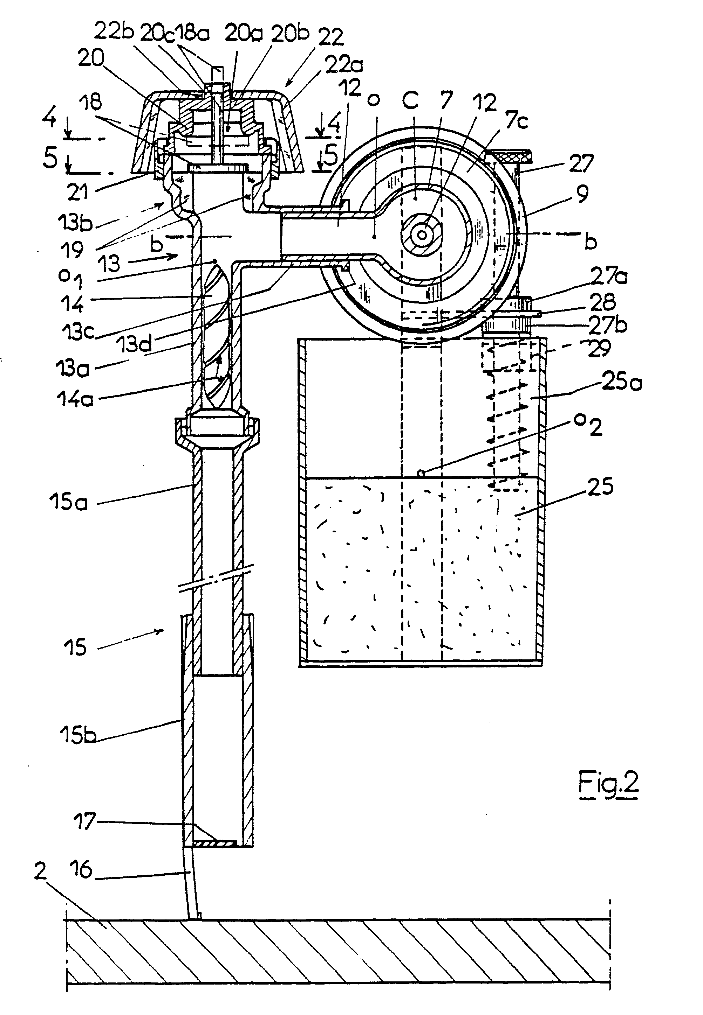

Ce robinet comprend un embout de fixation 1 raccordé à la colonne d'alimentation (non représentée) et au moyen duquel il est installé fixement sur une paroi latérale du réservoir 2 (partiellement illustré aux figures 1 et 2), laquelle présente un orifice 2a pour le passage dudit embout.

Dans la portion initiale de cet embout, est avantageusement logé un filtre 3 de grande surface, constituant une barrière efficace aux éventuelles impuretés.

L'embout de fixation et de raccordement 1 est, de préférence, assemblé par vissage au corps 7 du robinet ; les extrémités de jonction 1a et 7a desdits embouts de fixation et corps étant, par exemple, respectivement dotées d'un taraudage et d'un filetage complémentaires permettant cet assemblage démontable.

Dans le corps 7, est aménagé un conduit d'admission 7b disposé dans l'alignement de l'embout de fixation 1.

Le conduit d'admission 7b débouche dans une chambre annulaire C ménagée dans le corps 7, concentriquement audit conduit, ce qui assure une bonne isolation des octaves aigus lors de l'écoulement. L'extrémité aval 7b' du conduit d'admission 7b sert de siège à un obturateur constitué par une membrane élastique circulaire 4 laquelle est apte à se déformer, lors de l'écoulement, pour présenter un profil en dôme ; la souplesse du matériau dans lequel est exécutée ladite membrane et la forme de cette dernière ayant pour résultat d'atténuer les turbulences.

La membrane 4 délimite, par sa face opposée à sa face disposée en regard de l'extrémité aval du conduit d'admission 7b, une chambre de contre-pression C1, et elle comporte une perforation centrale 4a établissant une communication constante entre ledit conduit d'admission et ladite chambre de contre-pression.

La membrane 4 est fixée au moyen de son bord circulaire qui est serré entre une bague d'appui 5 et un bouchon 6 lequel délimite, avec ladite membrane, la chambre de contre-pression C1. La bague d'appui 5 et le bouchon 6 sont installés dans la partie postérieure cylindrique 7c du corps 7. Cette dernière est assemblée, avec une aptitude de rotation sur au moins 180°, à une chape de robinet 8, au moyen d'un écrou d'assemblage 9 pourvu d'un épaulement circulaire 9a de retenue de ladite chape de robinet, la surface latérale de la partie postérieure 7c du corps 7 étant dotée d'un filetage pour le vissage dudit écrou.

La chape de robinet 8 est constituée par un manchon dont la portion attenant à la partie postérieure 7c du corps 7 est dotée d'un alésage de plus grand diamètre constituant une seconde chambre d'écoulement C2 communiquant avec un orifice ou avec un petit conduit vertical de décharge 10. Le bouchon 6 comporte une perforation centrale 6a dont le bord aval sert de siège à un clapet 11 que l'on nommera « clapet pilote » dans la suite du présent exposé, de sorte que, lorsque ledit clapet pilote est écarté de son siège, la chambre de contre-pression C1 communique avec la chambre d'écoulement secondaire C2, par l'intermédiaire de ladite perforation centrale 6a.

Selon une disposition caractéristique de l'invention, le conduit d'admission 7b, la chambre annulaire C, la membrane 4 et son siège 7b', la chambre de contre-pression C1, le bouchon 6, le clapet pilote 11 et la chambre d'écoulement secondaire C2, sont alignés sur un même axe a-a correspondant à l'axe longitudinal du robinet proprement dit.

La perforation axiale 4a de la membrane 4, la chambre de contre-pression C1, la perforation axiale 6a du bouchon 6, la chambre d'écoulement C2 et l'orifice ou conduit de décharge 10, constituent le circuit secondaire du robinet dont le circuit primaire comprend : le conduit d'admission 7b, la chambre d'écoulement principale C et le circuit d'écoulement décrit ci-après.

Le circuit d'écoulement du circuit primaire comprend un conduit de sortie horizontale 12 raccordé à un orifice 0 ménagé dans la paroi latérale cylindrique du corps 7 délimitant la chambre d'écoulement principale C. Ce conduit de sortie est branché à la branche horizontale 13c d'un conduit 13 en forme de T que l'on nomme conventionnellement « équerre de descente » dans la suite de la présente description. Dans la branche verticale inférieure 13a de l'équerre de descente 13, est logé un étrangleur 14 constitué par une pièce cylindrique dotée d'extrémités effilées et comportant, latéralement, une gorge 14a en forme d'hélice assurant un écoulement hélicoïdal de l'eau contre la paroi cylindrique de ladite branche inférieure. Cette dernière débouche dans un tube plongeur 15 disposé dans son prolongement et réalisé en deux parties 15a, 15b assemblées de manière télescopique afin de permettre un réglage de la longueur dudit tube plongeur, en fonction de la hauteur du réservoir 2. La partie inférieure 15b du tube plongeur se termine par un doigt d'appui 16 destiné à reposer sur le fond du réservoir et à réserver un espace entre ledit fond et la base dudit tube plongeur. En outre, l'extrémité de sortie de la partie inférieure mobile 15b du tube-plongeur, est, de manière avantageuse, partiellement obturée par une membrane déformable 17 exerçant une action de freinage sur l'écoulement de l'eau dans le circuit principal, de sorte que cet écoulement s'effectue dans des conduits entièrement immergés. Grâce à cette disposition, on améliore sensiblement la qualité sonore de l'écoulement.

La branche horizontale 13c de l'équerre de descente 13 est assemblée au conduit de sortie horizontal 12, au moyen d'un dispositif de jonction permettant une rotation de ladite branche et, par conséquent, une rotation du conduit vertical d'écoulement 13a-15 autour de l'axe b-b de cette dernière, sur au moins 180°, cet axe étant perpendiculaire à l'axe a-a de rotation du corps (7).

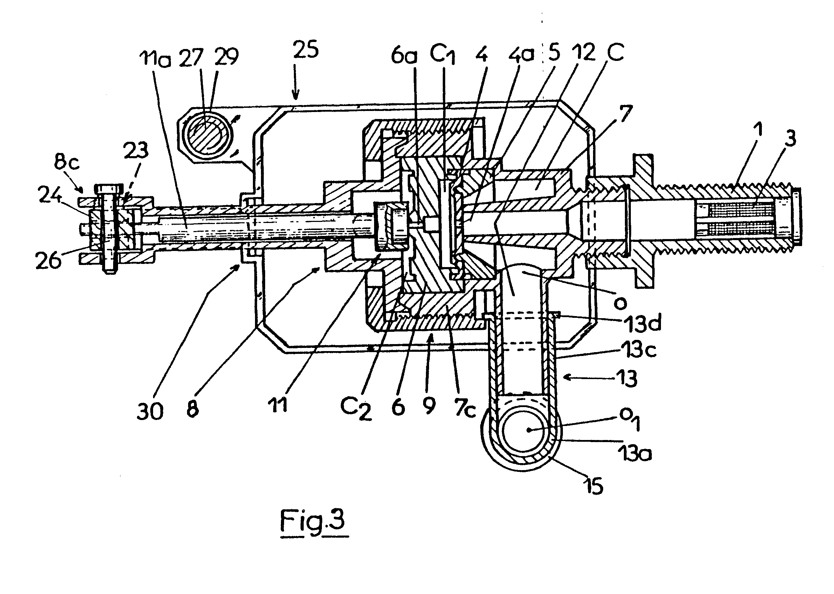

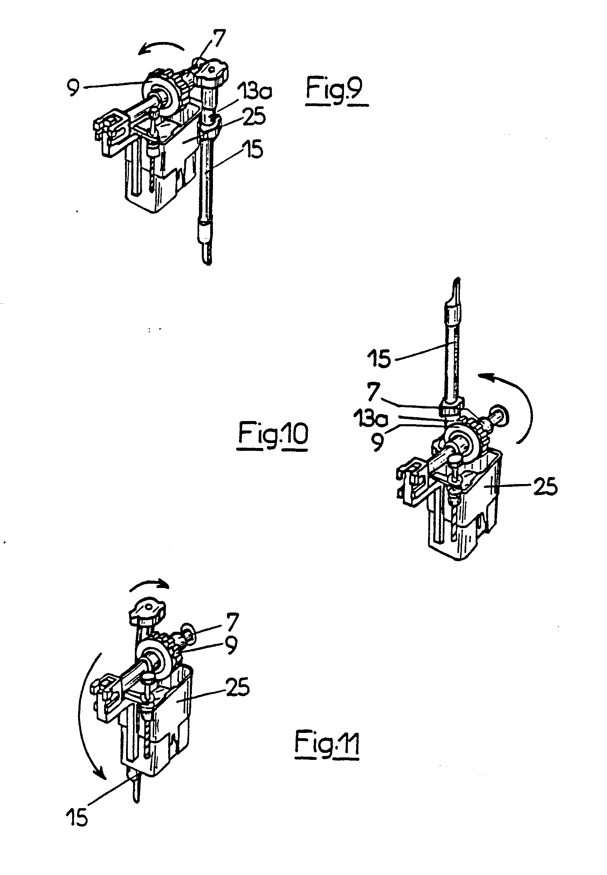

Par exemple et comme illustré aux figures 2 et 3, le conduit de sortie 12 est simplement emboîté, sans jeu excessif, dans la branche 13c. Grâce à cette disposition et au fait que le corps 7 peut également être animé d'un mouvement de rotation autour de son axe, il est possible de placer le conduit vertical d'écoulement 13a-15 sur l'un ou l'autre des côtés dudit corps et/ou du flotteur décrit dans la suite du présent exposé, en fonction de l'emplacement de l'orifice 2a des réservoirs. Il suffit, en effet, pour basculer le conduit vertical d'écoulement sur le côté opposé du corps 7 du robinet, à partir d'une position déterminée (figure 9), de débloquer et de dévisser légèrement l'écrou 9 pour pouvoir imprimer une rotation de 180° audit corps et, par conséquent, audit conduit vertical d'écoulement qui se trouve alors relevé vers le haut (figure 10) et qui peut être ensuite instantanément rabattu vers le bas, sur le côté opposé du corps 7 (figure 11), grâce au montage rotatif de la branche horizontale 13c de l'équerre de descente 13 sur le conduit de sortie horizontal 12.

L'extrémité libre ou extérieure de la branche 13c est pourvue d'une collerette de retenue 13d dont un segment se trouve engagé dans la cavité délimitée par la paroi latérale cylindrique de l'écrou 9, lorsque ce dernier est vissé en position de blocage. De la sorte, le coulissement axial, en direction de l'extérieur, de la branche 13c sur le conduit de sortie 12 est limité par le bord avant de ladite paroi cylindrique contre laquelle vient buter ladite collerette, ce qui assure la permanence de l'assemblage de ladite branche et dudit conduit (figures 2 et 3).

Suivant une autre disposition de l'invention, le dispositif antisiphon équipant le robinet, est disposé au-dessus de l'entrée 01 du conduit vertical d'écoulement constitué par la branche inférieure 13a de l'équerre de descente et par le tube plongeur 15.

Selon le mode d'exécution avantageux illustré à la figure 2, ce dispositif anti-siphon est installé sur le sommet de la branche verticale supérieure 13b de l'équerre de descente 13. Il comprend un clapet 18 reposant, en position de repos correspondant à la fermeture du robinet, sur une pluralité de nervures ou ergots 19 dont est pourvue, intérieurement, ladite branche verticale supérieure 13b, dans sa partie haute. Le siège superposé 20 du clapet comporte un orifice axial 20a de diamètre plus important que celui de la tige de guidage 18a solidaire dudit clapet, et il est, par exemple, fixé sur le sommet fileté de la branche verticale supérieure de l'équerre de descente, au moyen d'une bague de verrouillage 21 pourvue d'un épaulement circulaire de retenue. Lorsque l'eau s'écoule dans le conduit vertical d'écoulement, le clapet 18 est plaqué contre le bord inférieur de l'orifice axial 20a du siège 20, comme cela est expliqué dans la suite du présent exposé.

Le siège 20 comporte une partie supérieure 20b en forme de pont pourvue, dans sa partie médiane, d'un petit manchon de guidage 20c dans lequel peut coulisser la tige 18a du clapet 18. Sur cette partie en forme de pont, est installé un capot ou déflecteur 22 comportant deux ouïes latérales 22a pour le passage de l'air et un orifice axial de centrage 22b dans lequel est logé le manchon de guidage 20c.

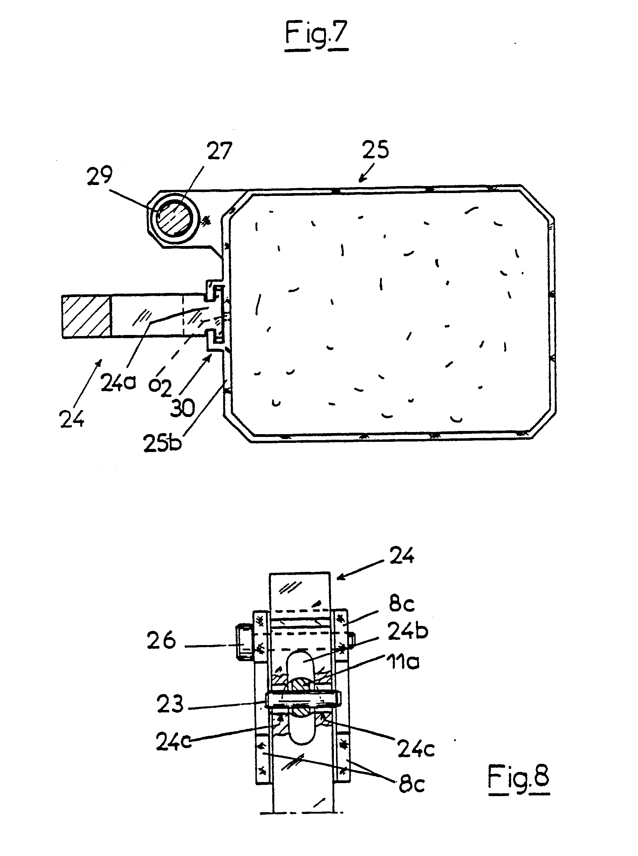

Le clapet pilote 11 est solidaire d'une tige axiale 11a montée avec une aptitude de coulissement dans la portion de guidage de plus petit diamètre du manchon ou chape de robinet 8. L'extrémité postérieure de cette tige est articulée, au moyen d'un axe 23, sur un levier 24 portant le flotteur 25 disposé au-dessous du corps du robinet. Ce levier est lui-même articulé, au moyen d'un axe 26, dans une chape 8c constituant la partie postérieure du manchon 8, ledit axe 26 étant disposé au-dessus de l'axe 23 d'articulation de la tige porte-clapet 11a. L'axe 23 est porté par l'extrémité postérieure de la tige 11a logée dans une ouverture 24b que présente la portion supérieure dudit levier, les extrémités opposées dudit axe étant, par ailleurs, montées avec une aptitude de déplacement dans des fentes symétriques 24c que présentent les parois latérales opposées délimitant ladite ouverture, comme le montre plus spécialement la figure 8.

Le robinet comporte des moyens permettant un réglage de la position du flotteur 25 dans le plan vertical, c'est-à-dire un réglage du niveau du volume d'eau utile dans le réservoir 2. Ce dispositif comprend une vis 27 portée par une platine 28 rigidement solidaire du levier 24. Cette vis comporte deux épaulements 27a, 27b disposés de part et d'autre de la platine 28, de sorte qu'elle est mobile en rotation, mais immobilisée en translation. D'autre part, la portion inférieure filetée de ladite vis se visse dans un écrou 29 rigidement solidaire du flotteur 25 dont l'une des parois est équipée, extérieurement, d'une glissière 30 montée avec une aptitude de coulissement sur la portion inférieure rectiligne 24a du levier porte-flotteur 24, laquelle est conformée de manière complémentaire au profil de ladite glissière. De la sorte, le flotteur 25 et également, par conséquent, l'écrou 29 étant immobilisé en rotation mais non en translation, on conçoit que la rotation de la vis 27, dans un sens ou dans l'autre, entraîne, suivant le sens de rotation, un déplacement ascendant ou descendant dudit flotteur par rapport au levier porte-flotteur 24.

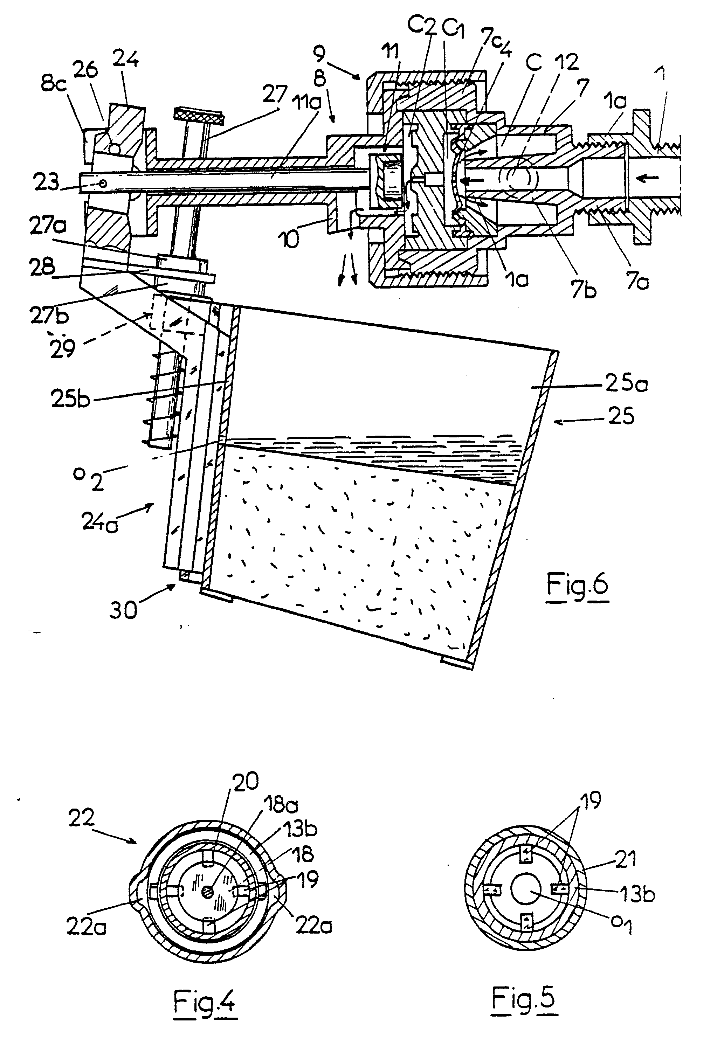

Suivant une autre disposition caractéristique de l'invention, la partie supérieure du flotteur 25 constitue une cuvette 25a disposée au-dessous de l'orifice de sortie du conduit de décharge 10 du circuit secondaire, ladite cuvette étant pourvue, dans sa partie inférieure, d'au moins un orifice de délestage 02 dont le débit peut être avantageusement inférieur a celui du circuit secondaire. L'orifice 02 est, de manière intéressante, disposé à la partie inférieure de la paroi 25b de la cuvette 25a la plus proche de l'axe de pivotement 26 du flotteur. De la sorte, lorsque ce dernier est basculé vers le bas, l'eau déchargée du circuit secondaire s'accumule dans la cuvette 25a inclinée (figure 6), jusqu'à ce que son niveau atteigne l'orifice de délestage 02.

Le fonctionnement du robinet qui vient d'être décrit est le suivant : en position de fermeture (figures 1 à 3), le flotteur 25 est maintenu en position haute par la poussée de l'eau contenue dans le réservoir 2. Par l'intermédiaire du levier porte-flotteur 24 et de la tige porte-clapet 11a, le clapet pilote 11 est énergiquement pressé contre son siège ; le délestage du flotteur résultant de l'écoulement, par l'orifice 02, de l'eau précédemment déchargée dans la cuvette 25a, après que ledit flotteur soit revenu en position haute, ayant pour effet de surcomprimer ledit clapet pilote sur son siège. L'eau ne peut circuler dans le circuit secondaire 4a-C1-6a-C2-10. D'autre part, la membrane 4 est aussi appliquée sur son siège, car l'eau arrivée dans la chambre de contre-pression C1, à travers la perforation 4a, est soumise à une pression ayant pour effet de presser ladite membrane sur son siège 7b', compte tenu du fait que la surface S2 de cette dernière qui délimite ladite chambre, est plus importante que sa surface opposée S1 délimitant l'embouchure du conduit d'admission 7b constituant ledit siège. L'eau ne peut davantage circuler dans le circuit primaire 7b-C-0-12-13-15. Dans cette situation, le clapet 18 du dispositif anti-siphon repose sur son assise constituée par les nervures 19, de sorte que le circuit de prise d'air (comprenant : les passages résultant de la différence entre le diamètre dudit clapet et le diamètre de l'alésage nervuré de la branche supérieure 13b de l'équerre de descente, l'orifice axial 20a du siège 20 et les ouïes 22a du déflecteur 22), est ouvert. De la sorte, toute réaspiration de l'eau contenue dans le réservoir 2, dans le circuit d'alimentation de l'installation, est rendue impossible en cas de dépression dans ledit circuit.

Lorsqu'on vidange le réservoir 2, à l'aide du dispositif d'évacuation équipant ce dernier, le flotteur 25 bascule vers le bas (figure 6) en entraînant, par l'intermédiaire du levier 24 et de la tige 11a, le recul du clapet 11 permettant la décompression de la chambre C1 et la circulation de l'eau dans le circuit secondaire. La disparition de la pression dans la chambre C1 permet la déformation et l'écartement de la membrane obturatrice 4 de son siège, sous la poussée de l'eau provenant du circuit d'alimentation et canalisée par le conduit d'admission coaxial 7b. Cette eau remplit la chambre annulaire C, passe dans le conduit de sortie 12 par l'orifice 0, et s'écoule dans le réservoir 2, par l'équerre de descente 13 et le tube plongeur 15 (circuit primaire).

On observe que, lors de la circulation de l'eau dans le circuit primaire, la pression résiduelle résultant de la présence de l'étrangleur 14 dans la branche inférieure de l'équerre de descente 13, a pour effet de provoquer une remontée de l'eau dans la branche supérieure de cette dernière, ce qui permet le soulèvement du clapet 18 (tracé en traits interrompus de la figure 2) et l'application dudit clapet sur son siège superposé 20, c'est-à-dire la fermeture du circuit de prise d'air. De la sorte, on évite toute aspiration d'air dans le circuit d'écoulement, lors du remplissage du réservoir, ce qui supprime les nuisances sonores qui résultent d'une telle aspiration (chuintements aigus, turbulences, émulsion de fluide, etc. ).

Au cours du remplissage, l'eau circule également dans le circuit secondaire, après franchissement de la perforation centrale 4a de la membrane 4 ; l'eau qui s'écoule dans ce circuit se déchargeant dans la cuvette 25a, en obtenant ainsi un lestage supplémentaire du flotteur 25 ayant pour conséquence intéressante de ralentir la remontée de ce dernier.

La montée de l'eau dans le réservoir provoque le pivotement vers le haut du flotteur qui reçoit une poussée de bas en haut, et ce pivotement, par l'intermédiaire du levier 24 et de la tige 11a, assure la translation axiale progressive du clapet pilote 11 en direction de son siège. En fin de course de remontée du flotteur, le clapet pilote est appliqué sur son siège et obture le passage 6a (fermeture du circuit secondaire). La pression monte alors dans la chambre de contre-pression C1 (S2 > a S1) et plaque la membrane élastique 4 contre son siège 7b' constitué par l'extrémité libre du conduit d'admission 7b, ce qui assure la fermeture du circuit primaire, c'est-à-dire la fermeture du robinet. L'eau finit de s'écouler de la cuvette 25a dont le fond est revenu en position sensiblement horizontale et, comme indiqué précédemment, le délestage du flotteur qui en résulte permet d'élever la force d'application du clapet pilote 11 sur son siège. On observe que cette obturation est très efficace et insensible aux éventuelles élévations de pression dans le circuit d'alimentation. En raison de la poussée ascendante à laquelle est soumis le flotteur et de la faible longueur du bras de levier constitué par la portion du levier porte-flotteur 24 comprise entre les axes d'articulation 23 et 26, il est radicalement exclu qu'une élévation de la pression dans la chambre C1 puisse provoquer un recul du clapet

11.

**Revendications**

1. Robinet hydromécanique pour réservoir de chasse d'eau, du genre comportant un circuit d'écoulement primaire à ouverture et fermeture hydrauliques au moyen d'un obturateur constitué par une membrane souple (4) et dont la position est fonction de la valeur de la pression présente dans un circuit d'écoulement secondaire équipé d'un clapet pilote (11) actionné par l'intermédiaire d'un flotteur (25) logé dans ledit réservoir (2), ledit circuit d'écoulement primaire comprenant un conduit d'écoulement (13a, 15) débouchant dans le réservoir (2), de préférence à proximité du fond de celui-ci, et un dispositif anti-siphon (18, 19, 20) comprenant un orifice d'entrée d'air (20a) étant disposé au-dessus de l'entrée (01) dudit conduit d'écoulement (13a, 15), caractérisé en ce que ce dispositif anti-siphon comprend un clapet (18) reposant de manière non étanche, en position d'ouverture du circuit de prise d'air, sur une assise sous-jacente ajourée (19) disposée au-dessus de l'entrée (01) du conduit d'écoulement (13a, 15), le siège (20) dudit clapet étant constitué par le bord inférieur dudit orifice d'entrée d'air (20a) et placé au-dessus dudit clapet, ledit conduit d'écoulement (13a, 15) étant agencé pour freiner l'écoulement de l'eau et provoquer une remontée de cette dernière lors de sa circulation dans le circuit d'écoulement primaire, ce qui permet d'assurer le soulèvement du clapet (18) et son application sur son siège (20) superposé.

2. Robinet hydromécanique suivant la revendication 1 caractérisé en ce que le moyen permettant d'engendrer la pression résiduelle provoquant la remontée d'eau assurant le soulèvement du clapet (18) du dispositif anti-siphon et son application sur son siège superposé (20) comprend un étrangleur (14) disposé dans le conduit d'écoulement (13a, 15) du circuit d'écoulement primaire, en aval ou au-dessous de l'entrée (01) dudit conduit d'écoulement.

3. Robinet hydromécanique suivant la revendication 2, caractérisé en ce que l'étrangleur (14) est pourvu, latéralement, d'une gorge hélicoïdale (14a).

4. Robinet hydromécanique selon l'une quelconque des revendications 1 à 3, caractérisée en ce qu'une membrane déformable (17) est disposé dans l'extrémité inférieure du conduit vertical d'écoulement (13a, 15) et obture partiellement l'orifice de sortie dudit conduit.

5. Robinet hydromécanique suivant la revendication 1, caractérisé en ce que le conduit vertical d'écoulement (13a, 15) du circuit primaire est monté avec une aptitude de pivotement, sur au moins 180 degrés, dans deux plans perpendiculaires, de sorte que ledit conduit vertical d'écoulement peut être placé d'un côté ou de l'autre du corps (7) et/ou du flotteur (25) dudit robinet.

6. Robinet hydromécanique selon la revendication 5, caractérisé en ce que le corps (7) du robinet est monté avec une aptitude de pivotement sur au moins 180 degrés, tandis que le conduit vertical d'écoulement (13a, 15) est monté sur ce dernier avec une aptitude de pivotement sur au moins 180 degrés, autour d'un axe (b-b) perpendiculaire à l'axe de rotation (a-a) dudit corps.

7. Robinet hydromécanique suivant la revendication 6, caractérisé en ce que la branche horizontale (13c) de l'équerre de descente (13) du conduit vertical d'écoulement (13a, 15) est assemblée au moyen d'un simple emboîtement avec le conduit horizontal de sortie (12) du circuit primaire, l'extrémité libre de ladite branche horizontale comportant une collerette de retenue (13d) dont un segment se trouve engagé dans la cavité délimitée par la paroi latérale d'un écrou (9) vissé sur le corps (7) dudit robinet.

8. Robinet hydromécanique suivant la revendication 1, caractérisé en ce que le clapet pilote (11) est solidaire d'une tige (11a) assujettie, au moyen d'une articulation, à un levier pivotant (24) portant le flotteur (25).

9. Robinet hydromécanique selon la revendication 8, caractérisé en ce que l'axe (26) permettant le pivotement du levier (24) portant le flotteur (25) est disposé au-dessus de l'axe d'articulation (23) de la tige porte-clapet (11a), ledit axe d'articulation étant logé avec une aptitude de déplacement dans des fentes (24c) que présente ledit levier.

10. Robinet hydromécanique suivant la revendication 1, caractérisé en ce que la partie supérieure du flotteur (25) est constituée par une petite cuvette (25a) dans laquelle s'écoule l'eau du circuit secondaire (4a, C1, 6a, C2, 10) durant la phase d'ouverture dudit robinet, ladite cuvette étant pourvue d'un orifice de délestage (02) dans sa partie inférieure.

11. Robinet hydromécanique selon la revendication 10, caractérisé en ce que le débit de l'orifice de délestage (02) du flotteur, est inférieur au débit du circuit secondaire (4a, C1, 6a, C2, 10).

12. Robinet hydromécanique selon l'une des revendications 10 ou 11, caractérisé en ce que l'orifice de délestage (02) est disposé à la partie inférieure de la paroi (25b) de la cuvette (25a) la plus proche de l'axe de pivotement (26) du flotteur.

**Claims**

1. Hydromechanical valve for flushing tank, of the kind comprising a primary flow circuit with hydraulic opening and closing by means of a closure constituted by a flexible membrane (4) and the position of which is a function of the value of the pressure present in a secondary flow circuit equipped with a pilot valve (11) actuated by means of a float (25) housed in the said reservoir (2), the said primary flow circuit comprising a flow conduit (13a,15) opening into the reservoir (2), preferably in proximity to the base of the latter, and an anti-siphon device (18,19,20) comprising an air inlet orifice (20a) disposed above the inlet (01) of the said flow conduit (13a,15), characterised in that this antisiphon device comprises a valve (18) resting in non-fluid-tight manner, in the position of opening of the air intake circuit, on a subjacent apertured seating (19) disposed above the inlet (01) of the flow conduit (13a,15), the seat (20) of the said valve being constituted by the lower edge of the said air inlet orifice (20a) and placed above the said valve, the said flow conduit (13a,15) being arranged to slow down the flow of water and cause a rising up again of this latter during its circulation in the primary flow circuit, thereby permitting to ensure the lifting of the valve (18) and its application on its superposed seat (20).

2. Hydromechanical valve according to claim 1 characterised in that the means permitting to give rise to the residual pressure causing the rising up again of the water ensuring the lifting of the valve (18) of the anti-siphon device and its application on its superposed seat (20) comprises a flow restrictor (14) disposed in the flow conduit (13a,15) of the primary flow circuit, downstream of or below the inlet (01) of the said flow conduit.

3. Hydromechanical valve according to claim 2, characterised in that the flow restrictor (14) is provided, laterally, with a helicoidal throat (14a).

4. Hydromechanical valve according to any one of claims 1 to 3, characterised in that a deformable membrane (17) is disposed in the lower end of the vertical flow conduit (13a,15) and partially closes the outlet opening of the said conduit.

5. Hydromechanical valve according to claim 1, characterised in that the vertical flow conduit (13a,15) of the primary circuit is mounted with a capability of pivoting, through at least 180°, in two perpendicular planes, in such a manner that the said vertical flow conduit can be placed at one side or the other of the body (7) and/or of the float (25) of the said valve.

6. Hydromechanical valve according to claim 5, characterised in that the body (7) of the valve is mounted with a capability of pivoting through at least 180°, whilst the vertical flow conduit (13a,15) is mounted on this latter with a capability of pivoting through at least 180°, about an axis (b-b) perpendicular to the axis of rotation (a-a) of the said body.

7. Hydromechanical valve according to claim 6, characterised in that the horizontal branch (13c) of the downflow T-piece (13) of the vertical flow conduit (13a,15) is assembled by means of a simple interfitting with the horizontal outflow conduit (12) of the primary circuit, the free end of the said horizontal branch comprising a retaining collar (13d) of which a segment is engaged in the cavity bounded by the lateral wall of a nut (9) threaded on the body (7) of the said valve.

8. Hydromechanical valve according to claim 1, characterised in that the pilot valve (11) is fast with a rod (11a) coupled, by means of an articulation, to a pivoting lever (24) carrying the float (25).

9. Hydromechanical valve according to claim 8, characterised in that the shaft (28) permitting the pivoting of the lever (24) carrying the float (25) is disposed above the pivot shaft (23) of the valve-carrying rod (lla), the said pivot shaft being housed, with a capability of displacement in openings (24c) of the said lever.

10. Hydromechanical valve according to claim 1, characterised in that the upper part of the float (25) is constituted by a small cup (25a) into which flows the water of the secondary circuit (4a, C1,8a, C2,10) during the phase of opening of the said valve, the said cup being provided with an overflow opening (02) in its lower part.

11. Hydromechanical valve according to claim 10, characterised in that the outflow from the overflow opening (02) of the float is less than the outflow from the secondary circuit (4a, C1,8a, C2, 10).

12. Hydromechanical valve according to one of claims 10 or 11, characterised in that the overflow opening (02) is disposed at the lower part of the wall (25b) of the cup (25a) nearest to the pivot shaft (26) of the float.

**Patentansprüche**

1. Hydromechanischer Hahn für Spülkasten nach Art derer, die einen primären Strömungskreis mit mittels einem hydraulisch zu öffnenden und zu schließenden Verschluß aufweisen, der aus einer elastischen Membran (4) besteht und deren Stellung von der Höhe des in einem sekundären Strömungskreis vorhandenen Drucks abhängt, welcher mit einer mit Hilfe eines in dem besagten Spülkasten (2) untergebrachten Schwimmers (25) betätigten Führungsklappe (11) ausgestattet ist, wobei der besagte, primäre Strömungskreis eine in den Spülkasten (2), vorzugsweise in der Nähe seines Bodens mündende Abflußleitung (13a, 15), und eine eine oberhalb des Eintritts (01) der besagten Abflußleitung (13a, 15) angeordnete Lufteintrittsöffnung (20a) aufweisende Anti-Siphonvorrichtung (18, 19, 20) besitzt, dadurch gekennzeichnet, daß diese Anti-Siphonvorrichtung ein, in Offenstellung des Lüftungskreislaufs, nicht dichtschließend, auf einer darunterliegenden, durchbrochenen, über dem Eintritt (01) der Abflußleitung (13a, 15) angeordneten Auflegeplatte (19) ruhendes Klappenventil (18) aufweist, wobei der Sitz (20) des besagten Klappenventils aus dem unteren Rand der besagten Lufteintrittsöffnung (20a) besteht und über dem besagten Klappenventil angebracht ist, wobei die besagte Abflußleitung (13a, 15) so eingerichtet ist, daß sie den Fluß des Wassers bremst und ein Ansteigen dieses letzteren während der Zirkulation in dem primären Strömungskreis hervorruft, wodurch das Anheben des Klappenventils (18) und sein Aufsetzen auf dem darüberliegenden Sitz (20) sichergestellt werden.

2. Hydromechanischer Hahn nach Anspruch 1, dadurch gekennzeichnet, daß das die Erzeugung des Restdrucks ermöglichende Mittel, der den Wasseranstieg hervorruft, welcher das Anheben des Klappenventils (18) der Anti-Siphonvorrichtung und dessen Aufsetzen auf seinem darüberliegenden Sitz (20) sicherstellt, einen der Abflußleitung (13a, 15) des primären Strömungskreises, in Abwärtsrichtung oder unterhalb des Eintritts (01) der besagten Abflußleitung angeordneten Drosselkörper (14) besitzt.

3. Hydromechanischer Hahn nach Anspruch 2, dadurch gekennzeichnet, daß der Drosselkörper (14) seitlich mit einer Spiralnut (14a) versehen ist.

4. Hydromechanischer Hahn nach einem der Ansprüche 1 bis 3, dadurch gekennzeichnet, daß eine verformbare Membran (17) an dem unteren Ende der vertikalen Abflußleitung (13a, 15) angeordnet ist und teilweise die Austrittsöffnung der besagten Leitung verschließt.

5. Hydromechanischer Hahn nach Anspruch 1, dadurch gekennzeichnet, daß die vertikale Abflußleitung (13a, 15) des Primärkreises um mindestens 180 Grad schwenkbar in zwei senkrechten Ebenen montiert ist, so daß die besagte vertikale Abflußleitung von der einen oder anderen Seite des Körpers (7) und/oder des Schwimmers (25) des besagten Hahns angebracht werden kann.

6. Hydromechanischer Hahn nach Anspruch 5, dadurch gekennzeichnet, daß der Körper (7) des Hahns um mindestens 180 Grad schwenkbar montiert ist, während die vertikale Abflußleitung (13a, 15) auf der letzteren um eine Achse (b-b), senkrecht zur Rotationsachse (a-a) des besagten Körpers un mindestens 180 Grad schwenkbar montiert ist.

7. Hydromechanischer Hahn nach Anspruch 6, dadurch gekennzeichnet, daß der horizontale Schenkel (13c) des Abflußdreiecks (13) der vertikalen Abflußleitung (13a, 15) mit der horizontalen Austrittsleitung (12) des Primärkreises durch einfaches Ineinanderstecken zusammengefügt ist, wobei das freie Ende des besagten horizontalen Schenkels einen Halteflansch (13d) aufweist, dessen eines Segment in der durch die Seitenwand einer auf den Körper (7) des besagten Hahns geschraubten Mutter (9) begrenzten Vertiefung steckt.

8. Hydromechanischer Hahn nach Anspruch 1, dadurch gekennzeichnet, daß die Führungsklappe (11) mit einer mittels eines Gelenks an einem den Schwimmer (25) tragenden, schwenkbaren Hebel (24) befestigten Stange (11a) verankert ist.

9. Hydromechanischer Hahn nach Anspruch 8, dadurch gekennzeichnet, daß die das Schwenken des den Schwimmer (25) tragenden Hebels (24) ermöglichende Achse (26) über der Gelenkachse (23) der Klappenventil-Tragestange (11a) angeordnet ist, wobei die besagte Gelenkachse in Schlitzen (24c), welche der besagte Hebel aufweist, verschiebbar untergebracht ist.

10. Hydromechanischer Hahn nach Anspruch 1, dadurch gekennzeichnet, daß das Oberteil des Schwimmers (25) aus einem kleinen Becken (25a) besteht, in welches das Wasser des Sekundärkreises (4a, C1, 6a, C2, 10) während der Offenphase des besagten Hahnes hineinläuft, wobei das besagte Becken an seinem Unterteil mit einer Entlastungsöffnung (02) versehen ist.

11. Hydromechanischer Hahn nach Anspruch 10, dadurch gekennzeichnet, daß die Abflußmenge der Entlastungsöffnung (02) des Schwimmers unter der Abflußmenge des Sekundarkreises (4a, CI, 6a, C2, 10) liegt.

12. Hydromechanischer Hahn nach einem der Ansprüche 10 oder 11, dadurch gekennzeichnet, daß die Entlastungsöffnung (02) an dem Unterteil der Wandung (25b) des Beckens (25a) in nächster Nähe der Schwenkachse (26) des Schwimmers angeordnet ist.

Fig.1

0 118 647

Fig.2

Fig.3

Fig.6

Fig.4

Fig.5

## Fig.7

## Fig.8

Fig.9

Fig.10

Fig.11